# EUROPEAN PATENT APPLICATION

(11) **EP 2 381 171 A2**
(43) Date of publication of application: **26.10.2011**
(21) Application number: 10190782.2
(22) Date of filing: 11.11.2010
(51) Int. Cl.: F23G 5/02, F23C 7/06

(54) **Method for increasing combustion efficiency**

(30) Priority: 20.04.2010 US 763527
(71) Applicant: Pan, Wen-Hsiung, Taipei City 104 (CN); Pan, Kuan-Yu, Taipei City 104 (CN)
(72) Inventor: Pan, Wen-Hsiung, Taipei City 104 (CN); Pan, Kuan-Yu, Taipei City 104 (CN)
(74) Representative: 2K Patentanwälte Blasberg Kewitz & Reichel

(57) **Abstract**

The present invention discloses a method for increasing combustion efficiency, which comprises steps of: providing a combustible material with the components thereof having an identical-ignition point, and placing the combustible material in a combustion space; measuring an ambient temperature of the combustion space, and predetermining a first temperature higher than the ambient temperature; heating the combustible material to the first temperature in a non-combustion way; supplying to the combustion space a combustion-supporting gas having a second temperature higher than the first temperature, and the combustion-supporting gas is air; and igniting the combustible material to be burned in the combustion space.

## Description

This application claims priority of US Patent Application No. 12/763,527 entitled "METHOD FOR INCREASING COMBUSTION EFFICIENCY" filed on April 20, 2010

### FIELD OF THE INVENTION

The present invention relates to a method for increasing combustion efficiency, particularly to a method for burning a combustible material with higher combustion efficiency.

### BACKGROUND OF THE INVENTION

Since the mankind learned to use fire, combustion has played an important role in the human civilization. Combustion is a complicated exothermic reaction. When a combustible material and an oxidant are heated to the ignition point, combustion occurs. During combustion, the combustible material is intensely oxidized. In a complete combustion, the combustible material completely reacts with the oxidant. Under the premise of complete combustion, the combustible material and the oxidant thereof will be completely converted into other compounds according to the chemical equation thereof. However, there is no perfect or complete combustion in practice. Incomplete combustion of the combustible material and the oxidant thereof will generate additional compounds. Further, incomplete combustion generates less thermal energy. For a combustible material with identical mass, the more complete the combustion of the combustible material, the more thermal energy released, and the more energy utilized.

For evaluating the combustion result of a combustible material, scientists proposed a term "combustion efficiency", which may be determined by the quantity of the residual combustible material and the residual air (containing oxygen). In an ordinary combustion environment, the temperature is usually below 750°C, and the combustion-supporting gas is the air. The air is a mixture composed of several gases. At an identical combustion temperature, the combustible material reacts with different gases in the air by different degrees, and the reactions generate different compounds dissipated in the air. In reality, incomplete combustion of a combustible material decreases the combustion efficiency, generates less thermal energy used by humans, and even releases harmful compounds polluting the air, such as dioxin and sulfur dioxide (SO₂). Dioxin appears when the combustion process cannot rapidly reach a temperature at which dioxin can be decomposed or unlikely to form (normally over 855°C). However, the combustible material has a higher temperature on the surface and a lower temperature in the interior. When the combustible material is a mixture, different components of the mixture respectively have different ignition points and start to burn at different times. Combustion will inhale the surrounding air with lower temperature, which slows the rising of combustion temperature and causes incomplete combustion. Before the temperature reaches 1000°C, massive dioxin has generated. Therefore, it is strictly required that the waste gas generated by an incinerator must be burned in the incinerator for an appropriate time until 99% of dioxin is burned out. Thus, a conventional combustion process is hard to decrease formation of dioxin. Besides, because of incomplete combustion or uneven temperature, less thermal energy can be utilized by humans from the conventional combustion process. For example, the temperature difference between the surface and the interior of burning coal causes unevenness of combustion. The coal is incompletely oxidized to combine with other elements to generate air-polluting compounds, such as dioxin and sulfur dioxide. Further, the incomplete combustion generates less heat. Therefore, the conventional combustion process has low combustion efficiency and generates too many harmful compounds.

### SUMMARY OF THE INVENTION

One objective of the present invention is to provide a method for increasing combustion efficiency, whereby is generated less pollutant and is released more thermal energy.

The present invention proposes a method for increasing combustion efficiency, which comprises steps of: providing a combustible material with components thereof having an identical ignition point, and placing the combustible material in a combustion space; measuring an ambient temperature of the combustion space, and predetermining a first temperature higher than the ambient temperature; heating the combustible material to the first temperature in a non-combustion way; supplying to the combustion space a combustion-supporting gas having a second temperature higher than the first temperature; and igniting the combustible material to burn in the combustion space.

The method of the present invention can increase the combustion temperature of the combustible material and make the combustion approach a complete combustion. Therefore, the present invention can increase combustion efficiency, decrease pollutant, and reduce emission of carbon dioxide.

### BRIEF DESCRIPTION OF THE DRAWINGS

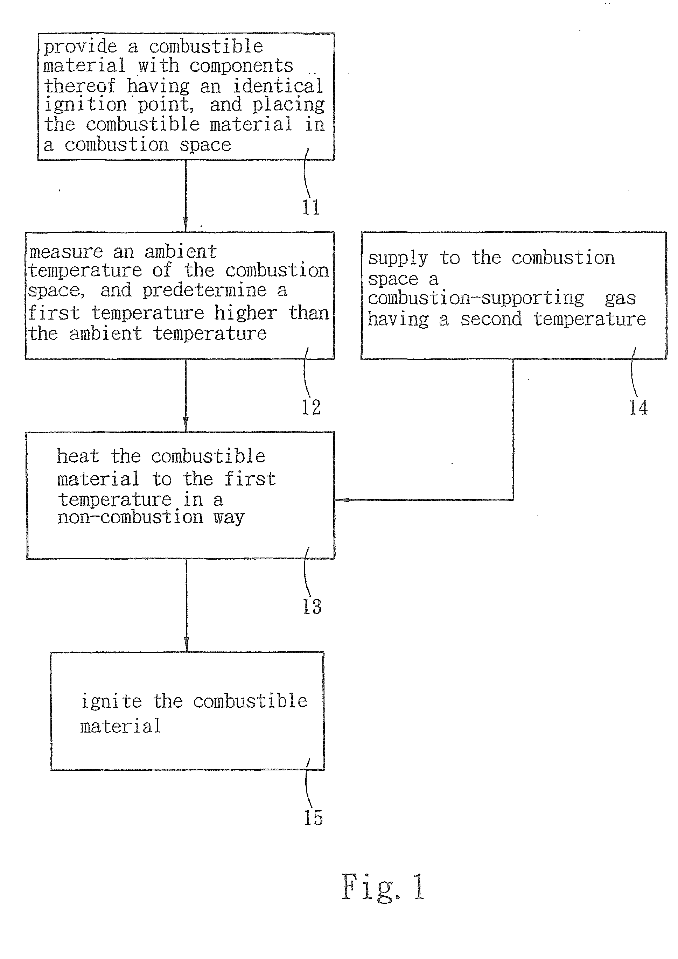

Fig. 1 is a flowchart of a method for increasing combustion efficiency according to the present invention.

### DETAILED DESCRIPTION OF THE PREFERRED EMBODIMENTS

The technical contents of the present invention are described in detail in cooperation with the drawings.

The present invention proposes a method for increasing combustion efficiency, which comprises steps of: A. providing a combustible material with components thereof having an identical ignition point, and placing the combustible material in a combustion space; B. measuring an ambient temperature of the combustion space, and predetermining a first temperature higher than the ambient temperature; C. heating the combustible material to the first temperature in a non-combustion way; D. supplying to the combustion space a combustion-supporting gas having a second temperature higher than the first temperature; and E. igniting the combustible material to burn in the combustion space. Step B and Step C aim to preheat the combustible material to the first temperature before igniting the combustible material, and the first temperature is preferred to approach the ignition point of the combustible material as much as possible but is still lower than that. The first temperature is usually between 0.5 and 0.6 times of the ignition point of the combustible material. In Step A, the components of the combustible material are required to have an identical ignition point lest they respectively have different ignition points. For a combustible material including components respectively with different ignition points, when the component having a lower ignition point begins to burn, the component having a higher ignition point is still below its ignition point and oxidized slowly. Thus, the component having a higher ignition point cannot fully react with the combustion-supporting gas, which may generate a great amount of harmful compounds. Although it is stated hereinbefore that the components of the combustible material should have an identical ignition point, ±2% error is likely to occur in reality. Therefore, the present invention does not exclude the inevitable errors but includes probable errors. The greater the error, the lower the combustion efficiency. In a preferred embodiment, the components of the combustible material have an identical specific heat. In such a case, the temperatures of all the components of the combustible material rise at the same speed. Thus, the combustible material is exempted from uneven reaction. In one embodiment, the combustible material is solid-state matter. In Step C, the combustible material is heated in a non-combustion way to make the surface and interior of the combustible material approach the first temperature as much as possible. In such a case, the entire combustible material has approached the ignition point but does not begin to burn. In Step D, a combustion-supporting gas is supplied to the combustion space. The combustion-supporting gas has a second temperature higher than the first temperature. The second temperature is between 0.6 and 0.8 times of the ignition point of the combustible material. The combustion-supporting gas may be a mixture composed of gaseous elements, such as air. After Steps A-D have been executed, the combustion space contains the combustible material at the first temperature and the combustion-supporting gas at the second temperature. Then, Step E ignites the combustible material to burn in the combustion space.

The combustible material has been fully heated to approach the ignition point, and the combustion-supporting gas is at a temperature higher than the first temperature. Thus, the combustible material can be burned fast and uniformly. As the combustible material and the combustion-supporting gas have a superior combustion condition, oxidation reaction of combustion is fast and uniform and releases more heat to raise the temperature rapidly. The rapid rising of temperature shortens the time in generating harmful compounds and pollutants, and the high temperature can further decompose a part of harmful compounds. Furthermore, the complete combustion can generate more available thermal energy used by humans. Therefore, the method of the present invention can reduce pollution and provide more energy at the same time.

Refer to Fig.1 a flowchart of a method for increasing combustion efficiency according to the present invention. Firstly, provide a combustible material with the components thereof having an identical ignition point, and place the combustible material in a combustion space (Step 11). Next, measure an ambient temperature of the combustion space before burning the combustible material, and predetermine a first temperature higher than the ambient temperature (Step 12). Next, heat the combustible material to the first temperature in a non-combustion way (Step 13). At the same time, set a second temperature higher than the first temperature, and supply to the combustion space a combustion-supporting gas having the second temperature (Step 14). The combustion-supporting gas may be pressurized to increase the supplying amount and rate for the combustion space to guarantee that the combustion-supporting gas is sufficient for the oxidation reaction of complete combustion lest the combustion-supporting gas under a normal pressure is insufficient to afford the combustion. After the combustible material has reached the first temperature and the combustion-supporting gas at the second temperature has been sufficiently supplied to the combustion space, the combustible material is ignited (Step 15). It should be noted that neither extra fuel is added to the combustion space nor the combustible material is compressed in the abovementioned steps. Via the steps described above, the present invention achieves the desired effect.

In one embodiment, the combustible material is a pile of woodchips, and the combustion-supporting gas is the normal air. The woodchips are placed inside a furnace (combustion space), and the fire outside the furnace is used to preheat the woodchips to the first temperature. At the same time, the fire preheating the woodchips also preheats the air to a second temperature (lower than the first temperature). The air is pumped into the furnace by a motor via a pipe installed at one opening of the furnace or near the chimney of the furnace. So far, the woodchips and the air in the furnace have been heated to a temperature nearer to the ignition point. Next, the woodchips is ignited directly. After ignition, the woodchips will be burned rapidly to a high combustion temperature. Thereby, the combustion has higher efficiency and generates less harmful compounds.

In conclusion, the present invention can burn a combustible material fast and uniformly and can raise the combustion temperature rapidly to shorten the time in generating harmful compounds. Further, the present invention uses the high temperature of complete combustion to decompose a part of pollutant and thus reduces the harmful compounds such as dioxin in the air. Furthermore, the uniform combustion makes the combustible material release a great amount available thermal energy used for humans. The method of the present invention is preferred to process the materials likely to have uneven combustion, including some organic materials, such as woodchips, abandoned lumber, and shells/peels of fruits, etc., and also likely to generate harmful compounds, such as coal. In the conventional waste disposal method, the abovementioned materials are buried or extracted with a chemical medicament to obtain useful components. Contrarily, the present invention can burn the abovementioned materials uniformly and reduce harmful compounds generated by combustion. The present invention processes, the abovementioned materials with combustion and releases more heat which can be converted to be utilized by humans. Besides, the method of the present invention can obtain more heat from a given amount of the combustible material with less emission of carbon dioxide.

The embodiments described above are only to exemplify the present invention but not to limit the scope of the present invention. Any equivalent modification or variation according to the spirit of the present invention is to be also included within the scope of the present invention, which is based on the claims stated below.

The above description has proved that the present invention indeed possesses utility, novelty and non-obviousness and meets the condition for a patent. Thus, the Inventor files the application for a patent. It will be appreciated if the patent is fast approved.

## Claims

1. A method for increasing combustion efficiency, comprising steps of:
providing a combustible material with components thereof having an identical ignition point, and placing the combustible material in a combustion space;
measuring an ambient temperature of the combustion space, and predetermining a first temperature higher than the ambient temperature;
heating the combustible material to the first temperature in a non-combustion way;
supplying to the combustion space a combustion-supporting gas having a second temperature higher than the first temperature; and
igniting the combustible material to be burned in the combustion space.

2. The method for increasing combustion efficiency according to claim 1, wherein the first temperature is lower than the ignition point of the combustible material.

3. The method for increasing combustion efficiency according to claim 1, wherein the combustible material is solid-state matter.

4. The method for increasing combustion efficiency according to claim 1, wherein the combustion-supporting gas is a mixed gas of multiple kinds of gas elements.

5. The method for increasing combustion efficiency according to claim 1, wherein the combustion-supporting gas is air.

6. The method for increasing combustion efficiency according to claim 5, wherein the combustion-supporting gas is pressurized before supplying to the combustion space.

7. The method for increasing combustion efficiency according to claim 1, wherein all the components of the combustible material have an identical specific heat.

8. The method for increasing combustion efficiency according to claim 1, wherein the first temperature is between 0.5 and 0.6 times of the ignition point of the combustible material.

9. The method for increasing combustion efficiency according to claim 1, wherein the second temperature is between 0.6 and 0.8 times of the ignition point of the combustible material.
